# EUROPEAN PATENT SPECIFICATION

(11) **EP 3 704 011 B1**
(45) Date of publication and mention of the grant of the patent: **10.12.2025**
(21) Application number: 18807417.3
(22) Date of filing: 30.10.2018
(51) Int. Cl.: B62M 3/02, B60K 6/42, B60W 50/08

(54) **ELECTRIC DRIVE VEHICLE**
FAHRZEUG MIT ELEKTROANTRIEB
VÉHICULE À PROPULSION ÉLECTRIQUE

(30) Priority: 02.11.2017 IT 201700124794
(43) Date of publication of application: 09.09.2020
(73) Proprietor: PIAGGIO & C. S.p.A., 56025 Pontedera (Pisa) (IT)
(72) Inventor: CARMIGNANI, Luca, 56025 Pontedera (Pisa) (IT); MARANO, Luca, 56025 Pontedera (Pisa) (IT)
(74) Representative: Giraldi, Elisa
(86) International application number: PCT/IB2018/058475
(87) International publication number: WO 2019/087053

(56) References cited:
- EP-A1- 1 606 131
- EP-A2- 1 738 947
- EP-A2- 1 738 947
- WO-A1-2015/068011

## Description

The present invention relates to an electric traction hybrid vehicle for example having three wheels, two rear wheels and one front wheel, or four wheels, where the traction thereof is guaranteed by an electric motor.

This type of vehicles has a battery pack arranged for powering an electric motor which, by actuating two driving wheels, achieves the propulsion to the vehicle itself; the battery pack can be recharged by means of a source connected to the mains providing alternating current. Such alternating current is transformed by an AC/DC inverter into direct current to put under charge the battery pack.

A hybrid vehicle has aboard a fuel consuming engine, in particular an internal combustion engine which is powered by a tank of fuel such as gasoline, diesel, GPL or methane.

In particular, in the vehicle according to the invention, such fuel consuming engine actuates an electric generator arranged to generate current therewith the propulsion electric motor is to be powered and/or therewith the battery pack is to be put under charge. It is further meant that these tasks can be performed simultaneously. To this regard, the fuel consuming engine controls an electric generator which produces direct current.

The assembly determined by the battery pack, the fuel consuming engine and its electric generator is further configured to provide direct current to a possible external load by means of an electric outlet.

However, the hybrid vehicle the present invention relates to could be, for example, a commercial vehicle which, when parked, could satisfy the need for providing electric current to one or more external loads of conventional type, then to be powered with alternating current.

WO 2015/068,011 A1 and EP 1,738,947 A2 describe hybrid vehicles wherein there are a fuel consuming engine and an electric motor. Document EP 1738947A2 shows the preamble of claim 1.

The technical problem underlying the present invention is to provide a vehicle allowing to obviate the drawback mentioned with reference to the known art.

Such problem is solved by a hybrid vehicle as specified above which characterizes in that it comprises a DC/AC inverter connected directly both to the battery group and to the electric generator actuated by the fuel consuming engine, having one or more alternating current electric outlets, wherein a selector is provided configured for selecting the energy source apt to power said electric motor and said one or more outlet sockets.

The main advantage of the vehicle according to the present invention lies in that it allows to power external loads both through the battery pack and through the fuel consuming engine, which in case can keep under charge the battery pack even when alternating electric current is provided to one or more external loads.

The present invention will be described hereinafter according to a preferred embodiment example, provided by way of example and not for limitative purposes with reference to the enclosed drawings wherein:

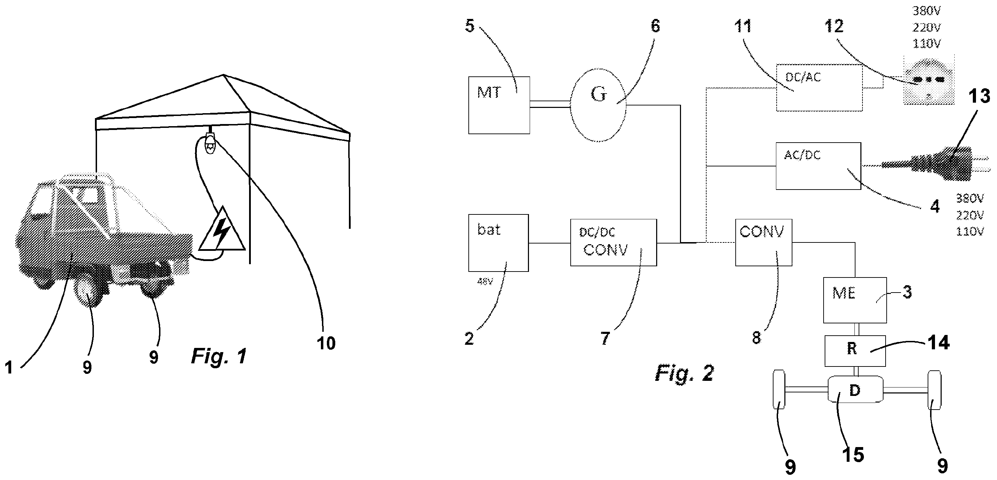

* figure 1 shows a scheme for using a hybrid vehicle according to the invention, connected to an external load powered with alternating electric current; and
* figure 2 shows a block diagram illustrating the wiring diagram of the hybrid vehicle of figure 1.

By referring to the figures, a hybrid vehicle is designated with 1, the traction thereof is guaranteed by an electric motor 3 which actuates, through a possible adapter 14, one or more driving wheels 9, in the present example a pair of driving wheels having a differential 15 with one single inlet axle actuated in rotation by said electric motor.

The vehicle 1 comprises a recharging plug 13 which can be connected to a source connected to the mains providing alternating current. Such alternating current is transformed by a first AC/DC inverter installed aboard the vehicle 4 into direct current to put under charge the battery pack 2.

Moreover, the vehicle 1 comprises aboard a fuel consuming engine 5, which in this example is an internal combustion engine which is powered by a fuel tank. This fuel consuming engine 5 has a driving axle which is directly keyed to a direct current electric generator 6, which is arranged for generating current therewith the electric motor 3 is to be powered directly or therewith the battery pack 2 is to be put under charge. It is further to be meant that these tasks can be performed simultaneously. The set of the fuel consuming engine 5 and of the electric generator 6 connected thereto forms a motor generator.

The electric generator 6 and the battery pack 2 are connected through a first converter 7 adjusting the voltage at the correct value for powering the battery pack 2.

In particular, the sum of the energy provided by the battery and/or the electric generator is so as to allow a constant cruise speed when the accelerator is controlled so as to supply the maximum available power. This is implemented when:
1) the battery pack is wholly charged and capable of supplying a power alone so as to achieve a maximum constant cruise speed,
2) the battery pack is partially discharged and the motor generator partially balances the insufficient supply of electric current of the battery pack to achieve said maximum constant cruise speed, and partially recharges the battery pack,
3) the battery pack is discharged and the motor generator generates electric energy exclusively for the electric motor so as to achieve said maximum constant cruise speed.

In each other situation, the motor generator recharges the battery and/or supplies energy to the electric motor when this it is not at maximum regime, depending upon the charge level and the power required for the electric motor.

A control unit implements a method for managing the supplied energy wherein substantially two different speed regimes are provided: a first speed wherein the accelerator is controlled at the end of the stroke, to determine the maximum possible cruise speed, and a second speed regime wherein the accelerator is controlled in an intermediate position between the end of stroke (maximum available supplied energy) and the initial position, corresponding to zero supplied energy.

According to such method, when the accelerator is controlled at the end of stroke the energy supplied to the propulsion group is provided exclusively by the battery pack, exclusively by the generator, or by both sources, to guarantee a maximum speed of the constant motor vehicle.

Otherwise, when the accelerator is controlled in an intermediate position, the electric energy produced by the electric generator is used at least partially to recharge the battery pack and the propulsion group is powered by the battery pack and/or by the portion of electric energy produced by the electric generator and not used to recharge the battery pack.

Moreover, the vehicle 1 comprises a first selector, which can be selected by the driver, to select a regime for managing the available energy, for example with the purpose of favouring electric traction only, useful for example in urban areas, or to exploit the electric energy produced by the motor generator in suburban area, wherein the environmental restrictions about pollution are milder, or to select a hybrid traction.

It is to be noted that the electric motor 3 is powered through a second converter 8 adjusting the voltage at the correct value for powering the electric motor 3.

The hybrid vehicle 1, in the present example, is a commercial vehicle which, when parked, is capable of satisfying the need for providing electric current to one or more external loads 10 of conventional type, that is to power with alternating current.

In an alternative embodiment, the hybrid vehicle 1 is a commercial vehicle configured for supplying electric current even while the vehicle is running. In this version, the motor generator is configured to supply a first portion of electric energy intended to the load determined by one or more external users and a second portion of energy higher than or equal to zero intended to the recharge of the battery pack 2 and/or to the electric motor 3.

According to the invention, the vehicle 1 comprises a second inverter 11, this time of DC/AC type powered both by the battery pack 2 and by the electric generator 6, which has one or more alternating current outlet sockets 12.

According to the invention, a second selector is used to allow the vehicle 1 to adjust even the mode for supplying the electric energy to the outlet socket 12, among:
- no supply
- supply of energy produced by the motor generator
- supply of energy accumulated in the batteries

By acting on the first and second selector the following operating modes result then to be implementable:
1. electric motor 3 of the vehicle 1 powered exclusively by the electric energy of the batteries 2 and no electric current supply to the outlet socket 12;
2. electric motor 3 of the vehicle 1 powered exclusively by the electric energy of the electric generator 6 and no electric current supply to the outlet socket 12;
3. electric motor 3 of the vehicle 1 partially powered by the electric energy of the battery pack 2 and partially by the electric energy of the electric generator 6, and no electric current supply to the outlet socket 12;
4. electric motor 3 of the vehicle 1 powered exclusively by the electric energy of the batteries 2 and the generator 6 generating electric current for the outlet socket 12 thereto an external load 10 is connected;
5. electric motor 3 of the vehicle 1 powered exclusively by the electric energy of the batteries 2 which provide electric current to the outlet socket 12 thereto an external load 10 is connected;
6. electric motor 3 of the vehicle 1 powered partially by the electric energy of the batteries 2 and partially by the electric energy of the electric generator 6 with generation of electric current by the electric generator 6 intended to the outlet socket 12 thereto an external load 10 is connected;
7. stationary vehicle and generation of electric current by the electric generator 6 intended to the outlet socket 12 thereto an external load 10 is connected;
8. stationary vehicle and supply of electric current by the batteries 2 to the outlet socket 12 thereto an external load 10 is connected;
9. stationary vehicle, powering of the external load 10 by means of the outlet socket 12 with electric current partially generated by the generator 6 and partially provided by the batteries 2.

Therefore, in the above-described vehicle generally a selector is provided configured for selecting the energy source apt to power said electric motor 3 and said one or more outlet sockets 12.

This selector is configured for setting an operating mode selected among:
- electric motor powered by said battery pack and/or said electric generator and no current supply to the outlet socket;
- outlet socket powered by said battery pack and/or said electric generator and no power to said electric motor;
- electric motor powered by said battery pack (2) and/or said electric generator and outlet socket powered by said battery pack and/or said electric generator.

Otherwise, one or more selectors can be used for selecting the operating mode of the vehicle among at least two of the following modes:
- electric motor of the vehicle powered exclusively by the electric energy of the battery pack and no electric current supply to the outlet socket;
- electric motor of the vehicle powered exclusively by the electric energy of the electric generator and no electric current supply to the outlet socket;
- electric motor of the vehicle powered partially by the electric energy of the battery pack and partially by the electric energy of the electric generator, and no electric current supply to the outlet socket;
- electric motor of the vehicle powered exclusively by the electric energy of the battery pack and electric generator generating electric current for the outlet socket thereto at least an external load is connected;
- electric motor of the vehicle powered exclusively by the electric energy of the battery pack (2) providing electric current to the outlet socket thereto at least an external load is connected;
- electric motor of the vehicle powered partially by the electric energy of the battery pack and partially by the electric energy of the electric generator, with generation of an additional portion of electric current by the electric generator intended to the outlet socket thereto at least an external load is connected;
- electric motor of the vehicle powered partially by the electric energy of the battery pack and partially by the electric energy of the electric generator, with generation of an additional portion of electric current by the battery pack intended to the outlet socket thereto at least an external load is connected;
- stationary vehicle and generation of electric current by the electric generator intended to the outlet socket thereto at least an external load is connected;
- stationary vehicle and supply of electric current by the battery pack to the outlet socket thereto at least an external load is connected;
- stationary vehicle, powering of the external load by means of the outlet socket with electric current partially generated by the electric generator and partially provided by the battery pack.

According to a not claimed variant, one or more selectors can be used for selecting the operating mode of the vehicle among at least two of the following modes:
- electric motor of the vehicle powered exclusively by the electric energy of the battery pack and no electric current supply to the outlet socket;
- electric motor of the vehicle powered exclusively by the electric energy of the electric generator and no electric current supply to the outlet socket;
- electric motor of the vehicle powered partially by the electric energy of the battery pack and partially by the electric energy of the electric generator, and no electric current supply to the outlet socket;
- electric motor of the vehicle powered exclusively by the electric energy of the battery pack and electric generator generating electric current for the outlet socket thereto at least an external load is connected;
- electric motor of the vehicle powered exclusively by the electric energy of the battery pack providing electric current to the outlet socket thereto at least an external load is connected;
- electric motor of the vehicle powered partially by the electric energy of the battery pack and partially by the electric energy of the electric generator, with generation of an additional portion of electric current by the electric generator intended to the outlet socket thereto at least an external load is connected;
- electric motor of the vehicle powered partially by the electric energy of the battery pack and partially by the electric energy of the electric generator, with generation of an additional portion of electric current by the battery pack intended to the outlet socket thereto at least an external load is connected;
- stationary vehicle and generation of electric current by the electric generator intended to the outlet socket thereto at least an external load is connected;
- stationary vehicle and supply of electric current by the battery pack to the outlet socket thereto at least an external load is connected;
- stationary vehicle, powering the external load by means of the outlet socket with electric current partially generated by the electric generator and partially provided by the battery pack.

It is to be noted that the charge indicators existing on the dashboard of the vehicle can be used to verify the charge state even when the whole system is used to power external loads with alternating current.

This system is flexible, it is particularly useful when a commercial vehicle is intended to temporary activities requesting the use of alternating current sources, without requesting the use of auxiliary batteries.

In particular, when the vehicle is stationary, the sum of the energy provided by the battery pack 2 and/or by the electric generator 6 is so as to allow to power one or more external loads, and one of the following steps is implemented:
1) the battery pack 2 is substantially or wholly charged and the electric generator is sufficient for powering exclusively the external loads by means of the outlet socket 12,
2) the battery pack 2 is substantially discharged and the motor generator, constituted by the fuel consuming engine 5 and by the electric generator 6, operates at a regime so that external loads are powered and the battery pack 2 is kept under charge,
3) the motor generator is not active, since it has no fuel or due to the user's choice, and the battery pack is however used to power an external load by means of the outlet socket 12.

The vehicle 1 can include a (not illustrated) central unit configured to provide in real time indication to a display on the dashboard of the power absorbed by the external loads and calculate the autonomy of the whole system, depending upon the residual fuel for the fuel consuming engine and the charge level of the batteries.

To the above described vehicle a person skilled in the art, with the purpose of satisfying additional and contingent needs, could introduce several additional modifications and variants, however all comprised within the protective scope of the present invention, as defined by the enclosed claims.

## Claims

1. An electric traction hybrid vehicle (1) the traction thereof is guaranteed by an electric motor (3) and which comprises aboard a fuel consuming engine (5), which actuates an electric generator (6) both for powering the electric motor (3) and for putting under charge a battery pack (2), wherein a DC/AC inverter (11) is provided, connected directly both to the battery group (2) and to the electric generator (6) actuated by the fuel consuming engine (5), which has one or more alternating current outlet sockets (12) connected to an electric generator (6) and to the battery pack (2) by means of the DC/AC inverter (11) and to one or more external loads (10) **characterised in that** it comprises two selectors, a first selector configured for selecting the electric energy source for the electric motor (3) among:
- energy of the battery pack (2);
- energy of the electric generator (6);
- energy of the battery pack (2) and of the electric generator (6); a second selector configured for selecting the electric energy source for one or more external loads (10) which can be connected to the outlet socket (12) among:
- no power;
- energy of the battery pack (2);
- energy of the electric generator (6);
- combined energy of the battery pack (2) and of the electric generator (6), wherein the two selectors are adapted to select the operating mode of the vehicle among the following modes:
- electric motor (3) of the vehicle (1) powered exclusively by the electric energy of the battery pack (2) and no electric current supply to the outlet socket (12);
- electric motor (3) of the vehicle (1) powered exclusively by the electric energy of the electric generator (6) and no electric current supply to the outlet socket (12);
- electric motor (3) of the vehicle (1) powered partially by the electric energy of the battery pack (2) and partially by the electric energy of the electric generator (6), and no electric current supply to the outlet socket (12);
- electric motor (3) of the vehicle (1) powered exclusively by the electric energy of the battery pack (2) and electric generator (6) generating electric current for the outlet socket (12) thereto at least an external load is connected (10);
- electric motor (3) of the vehicle (1) powered exclusively by the electric energy of the battery pack (2) providing electric current to the outlet socket (12) thereto at least an external load is connected (10);
- electric motor (3) of the vehicle (1) powered partially by the electric energy of the battery pack (2) and partially by the electric energy of the electric generator (6), with generation of an additional portion of electric current by the electric generator (6) intended to the outlet socket (12) thereto at least an external load is connected (10);
- electric motor (3) of the vehicle (1) powered partially by the electric energy of the battery pack (2) and partially by the electric energy of the electric generator (6), with generation of an additional portion of electric current by the battery pack (2) intended to the outlet socket (12) thereto at least an external load is connected (10);
- stationary vehicle and generation of electric current by the electric generator (6) intended to the outlet socket (12) thereto at least an external load is connected (10);
- stationary vehicle and supply of electric current by the battery pack (2) to the outlet socket (12) thereto at least an external load is connected (10);
- stationary vehicle, powering of the external load (10) by means of the outlet socket (12) with electric current partially generated by the electric generator (6) and partially provided by the battery pack (2).

2. The vehicle (1) according to claim 1, wherein said electric motor (3) actuates in rotation one single inlet axle of a differential controlling a pair of driving wheels (9).

3. The vehicle (1) according to claim 1 or 2, wherein a recharge plug (13) is provided which can be connected to the mains providing alternating current which is transformed by an AC/DC inverter (4) inside the vehicle into direct current to put under charge the battery pack (2).

4. The vehicle (1) according to one or more of the preceding claims, wherein the fuel consuming engine (5) has a driving axle which is directly keyed to the respective direct current electric generator (6), arranged to generate current therewith the electric motor (3) is to be powered directly and/or therewith the battery pack (2) is to be put under charge.

5. The vehicle (1) according to one or more of the preceding claims, wherein charge indicators existing on the dashboard of the vehicle (1) are used to verify the charging state even when the whole system is used to power external loads (10) with alternating current.

## Patentansprüche

1. Hybridfahrzeug (1) mit elektrischem Antrieb, dessen Antrieb durch einen Elektromotor (3) gewährleistet wird und das an Bord einen Kraftstoff verbrauchenden Motor (5) umfasst, der einen elektrischen Generator (6) antreibt, um sowohl den Elektromotor (3) mit Strom zu versorgen als auch einen Batteriesatz (2) aufzuladen, wobei ein Gleichstrom-Wechselstrom-Umrichter (11) vorgesehen ist, der direkt sowohl mit dem Batteriesatz (2) als auch mit dem vom Kraftstoff verbrauchenden Motor (5) angetriebenen elektrischen Generator (6) verbunden ist und eine oder mehrere Wechselstromsteckdosen (12) aufweist, die mit einem elektrischen Generator (6) und über den Gleichstrom-Wechselstrom-Umrichter (11) mit dem Batteriesatz (2) und mit einer oder mehreren externen Lasten (10) verbunden sind, **dadurch gekennzeichnet, dass** es zwei Wahlschalter umfasst, einen ersten Wahlschalter, der zum Auswählen der elektrischen Energiequelle für den Elektromotor (3) konfiguriert ist, aus:
- Energie von dem Batteriesatz (2);
- Energie von dem elektrischen Generator (6);
- Energie von dem Batteriesatz (2) und von dem elektrischen Generator (6); einen zweiten Wahlschalter, der zum Auswählen der elektrischen Energiequelle für eine oder mehrere externe Lasten (10) konfiguriert ist, die mit der Steckdose (12) verbunden werden können, aus:
- keinem Strom;
- Energie von dem Batteriesatz (2);
- Energie von dem elektrischen Generator (6);
- kombinierter Energie von dem Batteriesatz (2) und von dem elektrischen Generator (6), wobei die beiden Wahlschalter dazu geeignet sind, den Betriebsmodus des Fahrzeugs unter den folgenden Modi auszuwählen:
- Elektromotor (3) des Fahrzeugs (1), der ausschließlich durch die elektrische Energie des Batteriesatzes (2) mit Strom versorgt wird, und keine elektrische Stromzufuhr zu der Steckdose (12);
- Elektromotor (3) des Fahrzeugs (1), der ausschließlich durch die elektrische Energie des elektrischen Generators (6) mit Strom versorgt wird, und keine elektrische Stromzufuhr zu der Steckdose (12);
- Elektromotor (3) des Fahrzeugs (1), der teilweise durch die elektrische Energie des Batteriesatzes (2) und teilweise durch die elektrische Energie des elektrischen Generators (6) mit Strom versorgt wird, und keine elektrische Stromzufuhr zu der Steckdose (12);
- Elektromotor (3) des Fahrzeugs (1), der ausschließlich durch die elektrische Energie des Batteriesatzes (2) mit Strom versorgt wird, und elektrischer Generator (6), der elektrischen Strom für die Steckdose (12) erzeugt, mit der mindestens eine externe Last (10) verbunden ist;
- Elektromotor (3) des Fahrzeugs (1), der ausschließlich durch die elektrische Energie des Batteriesatzes (2) mit Strom versorgt wird und elektrischen Strom an die Steckdose (12) bereitstellt, mit der mindestens eine externe Last (10) verbunden ist;
- Elektromotor (3) des Fahrzeugs (1), der teilweise durch die elektrische Energie des Batteriesatzes (2) und teilweise durch die elektrische Energie des elektrischen Generators (6) mit Strom versorgt wird, wobei ein zusätzlicher Teil des elektrischen Stroms durch den elektrischen Generator (6) erzeugt wird, der für die Steckdose (12) vorgesehen ist, mit der mindestens eine externe Last (10) verbunden ist;
- Elektromotor (3) des Fahrzeugs (1), der teilweise durch die elektrische Energie des Batteriesatzes (2) und teilweise durch die elektrische Energie des elektrischen Generators (6) mit Strom versorgt wird, wobei ein zusätzlicher Teil des elektrischen Stroms durch den Batteriesatz (2) erzeugt wird, der für die Steckdose (12) vorgesehen ist, mit der mindestens eine externe Last (10) verbunden ist;
- stehendes Fahrzeug und Erzeugung von elektrischem Strom durch den elektrischen Generator (6), der für die Steckdose (12) vorgesehen ist, mit der mindestens eine externe Last (10) verbunden ist;
- stehendes Fahrzeug und Zufuhr von elektrischem Strom durch den Batteriesatz (2) zu der Steckdose (12), mit der mindestens eine externe Last (10) verbunden ist;
- stehendes Fahrzeugs, Versorgung der externen Last (10) über die Steckdose (12) mit elektrischem Strom, der teilweise von dem elektrischen Generator (6) erzeugt wird und teilweise von dem Batteriesatz (2) bereitgestellt wird.

2. Fahrzeug (1) nach Anspruch 1, wobei der Elektromotor (3) eine einzelne Eingangsachse eines Differentials zur Drehung antreibt, das ein Paar Antriebsräder (9) steuert.

3. Fahrzeug (1) nach Anspruch 1 oder 2, wobei ein Ladestecker (13) vorgesehen ist, der mit dem Stromnetz verbunden werden kann und Wechselstrom bereitstellt, der von einem Gleichstrom-Wechselstrom-Umrichter (4) im Fahrzeug in Gleichstrom umgewandelt wird, um den Batteriesatz (2) aufzuladen.

4. Fahrzeug (1) nach einem oder mehreren der vorhergehenden Ansprüche, wobei der Kraftstoff verbrauchende Motor (5) eine Antriebsachse aufweist, die direkt mit dem jeweiligen elektrischen Gleichstromgenerator (6) gekoppelt ist und ausgelegt ist, um Strom zu erzeugen, mit dem der Elektromotor (3) direkt mit Strom versorgt wird und/oder mit dem der Batteriesatz (2) aufgeladen wird.

5. Fahrzeug (1) nach einem oder mehreren der vorhergehenden Ansprüche, wobei auf dem Armaturenbrett des Fahrzeugs (1) vorhandene Ladeanzeigen verwendet werden, um den Ladezustand zu überprüfen, auch wenn das gesamte System verwendet wird, um externe Lasten (10) mit Wechselstrom zu versorgen.

## Revendications

1. Véhicule hybride à traction électrique (1) dont la traction est garantie par un moteur électrique (3) et qui comprend à bord un moteur consommant du carburant (5), qui actionne un générateur électrique (6) à la fois pour alimenter le moteur électrique (3) et pour mettre en charge un bloc-batterie (2), dans lequel un onduleur CC/CA (11) est prévu, relié directement à la fois au groupe de batteries (2) et au générateur électrique (6) actionné par le moteur consommant du carburant (5), qui a une ou plusieurs prises de sortie de courant alternatif (12) reliées à un générateur électrique (6) et au bloc-batterie (2) au moyen de l'onduleur CC/CA (11) et à une ou plusieurs charges externes (10), **caractérisé en ce qu'**il comprend deux sélecteurs, un premier sélecteur configuré pour sélectionner la source d'énergie électrique pour le moteur électrique (3) parmi :
- l'énergie du bloc-batterie (2) ;
- l'énergie du générateur électrique (6) ;
- l'énergie du bloc-batterie (2) et du générateur électrique (6) ; un deuxième sélecteur configuré pour sélectionner la source d'énergie électrique pour une ou plusieurs charges externes (10) qui peuvent être reliées à la prise de sortie (12) parmi :
- aucune alimentation ;
- l'énergie du bloc-batterie (2) ;
- l'énergie du générateur électrique (6) ;
- l'énergie combinée du bloc-batterie (2) et du générateur électrique (6), dans lequel les deux sélecteurs sont adaptés pour sélectionner le mode de fonctionnement du véhicule parmi les modes suivants :
- le moteur électrique (3) du véhicule (1) alimenté exclusivement par l'énergie électrique du bloc-batterie (2) et pas d'alimentation en courant électrique de la prise de sortie (12) ;
- le moteur électrique (3) du véhicule (1) alimenté exclusivement par l'énergie électrique du générateur électrique (6) et pas d'alimentation en courant électrique de la prise de sortie (12) ;
- le moteur électrique (3) du véhicule (1) alimenté partiellement par l'énergie électrique du bloc-batterie (2) et partiellement par l'énergie électrique du générateur électrique (6), et pas d'alimentation en courant électrique de la prise de sortie (12) ;
- le moteur électrique (3) du véhicule (1) alimenté exclusivement par l'énergie électrique du bloc-batterie (2) et du générateur électrique (6) générant un courant électrique pour la prise de sortie (12) à laquelle au moins une charge externe est reliée (10) ;
- le moteur électrique (3) du véhicule (1) alimenté exclusivement par l'énergie électrique du bloc-batterie (2) fournissant du courant électrique à la prise de sortie (12) à laquelle au moins une charge externe est reliée (10) ;
- le moteur électrique (3) du véhicule (1) alimenté partiellement par l'énergie électrique du bloc-batterie (2) et partiellement par l'énergie électrique du générateur électrique (6), avec génération d'une portion supplémentaire de courant électrique par le générateur électrique (6) destinée à la prise de sortie (12) à laquelle au moins une charge externe est reliée (10) ;
- le moteur électrique (3) du véhicule (1) alimenté partiellement par l'énergie électrique du bloc-batterie (2) et partiellement par l'énergie électrique du générateur électrique (6), avec génération d'une portion supplémentaire de courant électrique par le bloc-batterie (2) destinée à la prise de sortie (12) à laquelle au moins une charge externe est reliée (10) ;
- le véhicule à l'arrêt et la génération de courant électrique par le générateur électrique (6) destiné à la prise de sortie (12) à laquelle au moins une charge externe est reliée (10) ;
- le véhicule à l'arrêt et l'alimentation en courant électrique par le bloc-batterie (2) à la prise de sortie (12) à laquelle au moins une charge externe est reliée (10) ;
- le véhicule à l'arrêt, l'alimentation de la charge externe (10) au moyen de la prise de sortie (12) avec un courant électrique partiellement généré par le générateur électrique (6) et partiellement fourni par le bloc-batterie (2).

2. Véhicule (1) selon la revendication 1, dans lequel ledit moteur électrique (3) actionne en rotation un seul essieu d'entrée d'un différentiel commandant une paire de roues motrices (9).

3. Véhicule (1) selon la revendication 1 ou 2, dans lequel une prise de recharge (13) est fournie qui peut être reliée au réseau fournissant un courant alternatif qui est transformé par un onduleur CA/CC (4) à l'intérieur du véhicule en courant continu pour mettre en charge le bloc-batterie (2).

4. Véhicule (1) selon une ou plusieurs des revendications précédentes, dans lequel le moteur consommant du carburant (5) a un arbre moteur qui est directement réglé sur le générateur électrique à courant continu respectif (6), disposé pour générer du courant avec lequel le moteur électrique (3) doit être alimenté directement et/ou avec lequel le bloc-batterie (2) doit être mis en charge.

5. Véhicule (1) selon une ou plusieurs des revendications précédentes, dans lequel des indicateurs de charge existant sur le tableau de bord du véhicule (1) sont utilisés pour vérifier l'état de charge même lorsque l'ensemble du système est utilisé pour alimenter des charges externes (10) en courant alternatif.
